## Europäisches Patentamt

## European Patent Office

(11) Numéro de publication: **0 017 521**
**B1**

## Office européen des brevets

(12)

# FASCICULE DE BREVET EUROPEEN

(45) Date de publication du fascicule du brevet:
14.03.84

(51) Int. Cl.³: **C 09 C 1/14,** C 03 C 1/00,
C 03 C 1/02, C 01 G 21/02

(21) Numéro de dépôt: 80400310.1

(22) Date de dépôt: 07.03.80

(54) Nouvel additif au plomb et son procédé d'obtention.

(30) Priorité: 09.03.79 FR 7906049

(43) Date de publication de la demande:
15.10.80 Bulletin 80/21

(45) Mention de la délivrance du brevet:
14.03.84 Bulletin 84/11

(84) Etats contractants désignés:
AT BE CH DE FR GB IT LU NL SE

(56) Documents cités:
BE - A - 557 019
FR - A - 1 160 577
FR - A - 2 175 083
FR - A - 2 300 743
GB - A - 841 884

GLASTECHNISCHE BERICHTE, vol. 51, no. 12,
décembre 1978 Köln DE E. NIEMAN: "Verminderung der
Verstaubung bleihaltiger Rohstoffe in Glashütten",
pages 307-316

(73) Titulaire: **SOCIETE MINIERE ET METALLURGIQUE DE
PENARROYA** Société anonyme dite:, **Tour
Maine-Montparnasse 33, avenue du Maine,
F-75755 Paris Cédex 15 (FR)**

(72) Inventeur: **Limare, Armand, 26, rue Henri Levasseur,
F-78120 Rambouillet (FR)**
Inventeur: **Razumowski, Bernard, 1, rue Hector Berlioz,
F-78370 Plaisir (FR)**
Inventeur: **Sindezingue, Claude, 6, rue Rameau,
F-60300 Senlis (FR)**

(74) Mandataire: **Hammond, William et al, Service de la
Propriété Industrielle du Groupe IMETAL 1, avenue
Albert Einstein, F-78191 Trappes Cedex (FR)**

**0 017 521**

## Nouvel additif au plomb et son procédé d'obtention

La présente invention concerne un nouvel additif au plomb pouvant être notamment utilisé dans les industries du verre, par exemple les cristalleries, et de la céramique ainsi que son procédé d'obtention.

Les industries du verre et de la céramique utilisent couramment des oxydes de plomb, minium et/ou litharge, qui sont des produits pulvérulents dont les particules ont généralement un diamètre inférieur à 40 micromètres. L'utilisation de tels produits entraîne par leur envolement, par exemple au cours de leur mainipulation lors de la préparation des charges et lors de l'enfournement, des risques certains de pollution atmosphérique; ceci peut provoquer des troubles saturniens chez les utilisateurs de ces oxydes de plomb pulvérulents.

Aussi a-t-il été maintes fois envisagé d'agglomérer ces produits pulvérulents en ayant recours à un agent de liaison, de façon à obtenir des granulés qui soient de manipulation plus aisée. Comme agent de liaison, ont été notamment utilisés l'eau ainsi que des silicates entrant dans la composition des verres et céramiques.

Ainsi, dans l'article sur la réduction du volage des matières premières plombifères dans les verreries, publié dans Glastechnische Berichte (Glastechn. Ber. 51 [1978], Nr. 12, S. 307 – 316), il est indiqué que l'utilisation des granulés est plus appropriée que celle des matériaux pulvérulents. Cet article indique un certain nombre de liants susceptibles d'être utilisés tels que les huiles minérales, les silicates de sodium et la soude. Toutefois, ce texte ne divulge pas les rapports optimaux pour obtenir des additifs au plomb qui, lors de la manipulation, produisent peu de poussières. En effet, s'il démontre que l'utilisation des granulés permet d'éviter des envolements ayant lieu lors de l'utilisation de matériaux pulvérulents, il ne divulgue pas des granulés qui, lors de manipulations, produisent peu de poussières. En particulier, il ne divulgue pas les rapports entre les silicates alcalins et l'oxyde de plomb.

La demande de brevet français n° 2 175 083 décrit un procédé de fabrication d'additifs au plomb à partir de sous-oxydes de plomb et de composés silicifères. Les rapports entre la silice et les oxydes de plomb sont toujours élevés et la densité obtenue est trop élevée pour un emploi facile dans l'industrie du verre; le produit étant trop dense pour éviter une ségrégation à l'intérieur du réacteur de fabrication du verre.

Ainsi, il est décrit dans la demande de brevet français n° 2 300 743 un procédé pour fabriquer des granulés de minium dont la taille des particules est comprises entre 0,5 et 5 millimètres. On les prépare en introduisant du minium en poudre dans une granulatrice constituée par une cuve rotative ouverte vers le haut, inclinée par rapport à la verticale et en pulvérisant dans cette cuve une solution aqueuse de silicate de potassium. La proportion pondérale de silicate de potassium dans les granulés peut varier entre 2,5 et 5%, et de préférence entre 3 et 4,5% en poids.

D'autres granulés sont élaborés en utilisant comme liant l'eau, mais ils engendrent de la poussière lors de leur manipulation. De plus leur résistance à l'abrasion est faible.

Tous ces produits agglomérés ne donnent pas entièrement satisfaction soit parce que leur granulométrie entraîne des phénonèmes de ségrégation lors des mélanges avec les autres constituants de la charge et lors de la fusion, soit parce que leur manipulation produit des quantités encore trop importantes de poussières.

Aussi, un objet de la présente invention est un nouvel additif au plomb notamment pour les industries du verre, par exemple les cristalleries, et de la céramique qui se présente sous la forme de granulés ayant une résistance à l'abrasion supérieure à celle des produits connus jusqu'à présent, ainsi qu'une granulométrie voisine de celles des autres constituants de la charge dans laquelle ce nouvel additif est utilisé.

Un but de l'invention est de mettre à disposition un nouvel additif au plomb qui n'entraîne pas, lors de sa manipulation, la production de poussières dont l'envolement est source de pollution et parfois de saturnisme.

Un but de la présente invention est de fournir un procédé qui permet l'obtention de ce nouvel additif au plomb sous forme de granulés n'engendrant pas de poussière lors des manipulations, ayant une bonne résistance à l'abrasion et une répartition granulométrique adaptée à celles des autres constituants des charges dans lesquelles il est utilisé.

Un but supplémentaire de l'invention est de fournir un procédé qui permet l'obtention de granulés de forme irrégulière.

Un autre but de l'invention est un procédé qui permet éventuellement d'obtenir ce nouvel additif au plomb directement sous forme de granulés de dimensions désirées, c'est-à-dire sans qu'il soit nécessaire de le broyer ultérieurement.

Un but supplémentaire de l'invention est de fournir un procédé qui permet l'obtention de granulés soit d'oxydes primaires de plomb, soit de litharge, soit de minium, soit du mélange de ces oxydes.

Ces buts, ainsi que d'autres qui apparaîtront par la suite, sont atteints par le nouvel additif au plomb selon la présente invention qui contient un oxyde de plomb et un silicate alcalin par exemple soluble dans l'eau, dont le rapport pondéral de la quantité de plomb, calculée en tant que PbO, à la quantité de silicate alcalin, calculée en tant que $SiO_2$, est supérieur à 18 : 1, et est de préférence compris entre 18 et 32, dont le taux d'humidité est inférieur ou égal à 2%, et dont la masse volumique est au plus égale à 5 g/cm³.

Avantageusement, le rapport pondéral de la quantité de plomb, calculée en tant que PbO, à la quantité de silicate, calculée en tant que la somme de silice et d'oxydes alcalins contenus, est compris entre 14 et 24 et de préférence entre 14 et 18.

De préférence, l'oxyde de plomb est choisi dans le groupe constitué par les oxydes primaires de plomb, la litharge, le minium et les mélanges de ces oxydes.

Avantageusement, le silicate alcalin est choisi dans le groupe constitué par le silicate de sodium, le silicate de potassium ou un mélange de ces silicates; il peut être éventuellement additionné de soude et/ou de potasse.

De préférence, le rapport pondéral de la quantité de silice à celle de l'oxyde ou des oxydes alcalins contenus dans le silicate est compris entre 1 et 4 et avantageusement entre 3 et 4.

Le procédé pour obtenir ce nouvel additif au plomb comprend les étapes suivantes au cours desquelles:

a)    on mélange un oxyde de plomb avec tout ou partie d'une quantité déterminée d'un silicate alcalin soluble dans l'eau pour obtenir une pâte malléable;

b)    on conditionne le produit obtenu à l'étape a) de façon à obtenir des granulés de taille convenable;

c)    on soumet le produit obtenu à l'étape b) à un traitement thermique.

On peut également effectuer un traitement thermique de la pâte malléable otenue à l'étape a) avant l'étape b) de mise en forme.

Avantageusement, l'étape c) de traitement thermique comprend, d'une part, une première phase à une température comprise entre 50 et 200°C pendant une durée comprise entre quelques minutes et une heure, et, d'autre part, une seconde phase à une température comprise entre 80 et 700°C pendant une durée variant entre quelques minutes et une heure. De préférence, la température de la seconde phase est comprise entre 300 et 450°C lorsque l'oxyde de plomb utilisé est le minium, et entre 400 et 700°C lorsque l'oxyde de plomb utilisé est la litharge.

Avantageusement, on effectue les deux phases dans une même enceinte.

Quant à l'étape b) de conditionnement, elle est réalisée de façon à obtenir directement des granulés ayant la dimension demandée, c'est-à-dire sans qu'il soit nécessaire de broyer ulterieurement le produit.

Avantageusement les étapes b) et c) peuvent être réalisées simultanément. Dans ce cas, on mélange au cours de l'étape a) l'oxyde de plomb avec au plus les deux tiers et de préférence moins de la moitié de la quantité totale de silicate alcalin, et on ajoute la quantité restante entre la première et la seconde phase de l'étape c) de traitement thermique. La première phase est effectuée à une température comprise entre 50 et 70°C pendant une durée comprise entre quelques minutes et une heure et la seconde phase à une température comprise entre 80 et 150°C, et de préférence entre 100 et 130°C, pendant quelques minutes à une heure.

Selon un premier mode de réalisation de l'invention, on choisit le minium ($Pb_3O_4$) comme oxyde de plomb, et on utilise le silicate alcalin soluble en solution aqueuse dont la concentration en silicate est comprise entre 30 et 90% en poids de silicate. Si on utilise un silicate alcalin ayant un rapport moléculaire $R_m$ ($SiO_2$/oxyde alcalin) égal à l'unité, on doit réaliser le mélange de l'étape a) à une température comprise entre 50 et 100°C et, de préférence, entre 60 et 70°C. Par contre, si ce rapport moléculaire $R_m$ est supérieur ou égal à 2, on doit effectuer ce mélange à froid, c'est-à-dire à la température ambiante.

Selon un deuxième mode de réalisation de l'invention, on choisit la litharge comme oxyde de plomb, qui est mélangée avec le silicate alcalin soluble en poudre atomisée, c'est-à-dire obtenue par atomisation d'une solution de ce silicate. On réalise le mélange de ces deux constituants à froid quel que soit le rapport moléculaire $R_m$ du silicate alcalin, et en y ajoutant la quantité d'eau nécessaire pour obtenir une pâte qui reste malléable.

Selon un trosisième mode de réalisation, on mélange la totalité de l'oxyde de plomb avec au plus les deux tiers et de préférence moins de la moitié de la quantité totale de silicate alcalin soluble dans l'eau, puis on soumet la pâte malléable obtenue et conditionnée en granulés à un premier séchage dont la température est comprise entre 50 et 70°C pendant quelques minutes à une heure. Puis on mélange le produit ainsi séché avec la quantité restante de silicate alcalin soluble, puis on soumet le produit obtenu à un second séchage dont la température est comprise entre 80 et 150°C, et de préférence entre 100 et 130°C pendant quelques minutes à une heure. On obtient ainsi des granulés conformes à la présente invention.

La description qui suit et qui ne présente aucun caractère limitatif permettra aux spécialistes en la matière de mieux comprendre comment la présente invention peut être mise en œuvre.

Au cours de l'étape a), on mélange un oxyde de plomb avec un silicate alcalin soluble qui est, de préférence, un silicate de sodium ou un silicate de potassium ou leurs mélanges. Le rapport pondéral de la silice à l'oxyde alcalin (par exemple $SiO_2/Na_2O$) est compris entre 1 et 4, de préférence entre 3 et 4, et plus précisément entre 3 et 3,4.

3

Comme oxyde de plomb, on peut utiliser soit un oxyde primaire, soit de la litharge, soit du minium, soit leurs mélanges.

Dans le cas où l'on choisit le minium, on utilise le silicate alcalin soluble en solution aqueuse, dont la concentration en silicate est comprise entre 30 et 90% en poids. Si le rapport moléculaire $R_m$ du silicate alcalin employé est égal à l'unité, ce qui correspond au métasilicate, le mélange de l'étape a) doit être effectué à une température comprise entre 50 et 100°C, et de préférence entre 60 et 70°C, ceci afin d'éviter une cristallisation accélérée des hydrates de métasilicate. Si le mélange était réalisé à froid, la pâte obtenue durcirait très rapidement et ne resterait pas malléable pendant plusieurs heures, voire plusieurs jours.

Par contre, si ce rapport moléculaire $R_m$ du silicate alcalin utilisé est supérieur ou égal à 2, le mélange peut être effectué à froid, c'est-à-dire à la température ambiante, afin d'obtenir une plasticité suffisante et une homogénéité durable.

Dans le cas où l'on choisit comme oxyde de plomb la litharge, on mélange celle-ci, à froid, avec le silicate alcalin en poudre atomisée, celle-ci étant obtenue par atomisation d'une solution de silicate, et on ajoute la quantité d'eau nécessaire pour obtenir une pâte qui peut rester malléable pendant quelque temps. En général, cette quantité représente environ 12% de la quantité de litharge.

L'obtention de granulés de litharge est également possible en mettant en œuvre le procédé comme précédemment pour le minium.

La quantité de silicate alcalin, calculée en tant que silice $SiO_2$, ajoutée à l'oxyde de plomb, calculée en tant que PbO, est telle qu'elle est comprise entre 2 et 6% en poids dans le produit issu de l'étape c).

La pâte issue de l'étape a) peut être évacuée du dispositif mélangeur soit périodequement, soit en continu, et conditionnée sous forme de fil, de bande, de barre, de boudin, de boulet, de granulés ou d'une poudre obtenue après broyage des produits ci-dessus ou sous toute autre forme permettant une alimentation continue de l'étape c) de traitement thermique.

On soumet cette pâte conditionnée ou non à un traitement thermique qui comprend deux phases successives.

La première phase, qui est un séchage, a lieu à une température comprise entre 50 et 200°C et de préférence entre 105 et 180°C pendant une durée variant de 15 minutes à une heure. Au cours de cette phase, la déshydratation est relativement lente.

Quant à la deuxième phase, elle est réalisée à une température comprise entre 80 et 700°C pendant une durée variant de 15 minutes à une heure. La température est de préférence comprise entre 200 et 450°C si l'oxyde de plomb est le minium, et entre 400 et 700°C s'il s'agit de la litharge.

La deuxième phase du traitement thermique qui est dans ce cas un frittage, permet, d'une part, de poursuivre et de maîtriser la déshydratation de la pâte conditionnée, et, d'autre part, d'obtenir un produit qui résiste à l'abrasion.

Le séchage et le frittage peuvent être réalisés dans une même enceinte dont le profil de température est déterminé en conséquence.

A l'issue de l'étape c) de traitement thermique, on obtient un produit qui ne tache pas les doigts et qui résiste à une abrasion ménagée comme celle qu'il peut subir par exemple lors des différents transports et du remplissage des silos.

Selon la granulométrie désirée du produit final, on peut conditionner le produit issu de l'étape c) dans des appareils classiques tels que broyeurs, hacheurs, et on le traite de façon connue (tamisage, élutriation) pour ne retenir que la fraction granulométrique recherchée. Il est bien évident que la conduite de cette étape de conditionnement ne doit entraîner que la production minimale de granulés ayant une granulométrie non désirée et devant être par ce fait recyclée dans le procédé. De plus, il ne faut pas altérer la qualité antipoussière du produit issu des étapes précédentes par les fines particules formées lors du broyage et difficilement éliminables par tamisage. C'est pourquoi on préférera éviter cette étape finale de broyage en choisissant les appareils classiques qui, mis en œuvre selon l'invention, donneront directement un produit fini.

Dans le cas où l'on veut obtenir un nouvel additif au plomb conforme à la présente invention en réalisant simultanément les étapes b) et c), on mélange la quantité totale de l'oxyde de plomb choisi dans le groupe constitué par les oxydes primaires de plomb, la litharge, le minium ou les mélanges de ces oxydes, avec au plus la moitié de la quantité totale du silicate alcalin soluble, de préférence avec de 30 à 50% de cette quantité. Puis on soumet la pâte ainsi obtenue à un conditionnement qui peut être réalisé lors de l'étape de mélange pour obtenir des premiers granulés que l'on soumet à un premier séchage dont la température est comprise entre 50 et 70°C pendant quelques minutes à une heure. Ces premiers granulés sont ensuite mélangés avec le restant de la quantité de silicate alcalin et on porte le mélange à une température comprise entre 80 et 700°C, de préférence entre 50 et 150°C lorsqu'on ne recherche pas de réaction particulière entre le liant et le ou les oxydes, pendant une durée de quelques minutes à une heure. Les granulés ainsi obtenus ont une taille des particules inférieure à 0,5 millimètre.

Ces granulés sont avantageusement obtenus en utilisant, pour les étapes de mélange et de conditionnement, des appareils ayant des vitesses de rotation élevées, c'est-à-dire comprises entre 1000 et 5000 tours/minutes.

Le nouvel additif au plomb selon la présente invention possède des caractéristiques physico-chimiques qui sont très favorables à son utilisation dans les industries du verre, notamment les cristalleries, et de la céramique. Le rapport pondéral de la quantité de plomb, calculée en tant que PbO, à la quantité de silicate alcalin, calculée en tant que SiO$_2$, est supérieur à 18 : 1. Pour obtenir par le procédé décrit ci-dessus un nouvel additif selon la présente invention ayant des propriétés particulières, il est avantageux que le rapport pondéral de la quantité de plomb calculée en tant que PbO à la quantité de liant, exprimée en SiO$_2$ contenu dans le liant, soit compris entre 18 et 32 et de préférence entre 18 et 23. De plus, le rapport pondéral de la quantité de plomb, calculée en tant que PbO, à la quantité de liant, calculée en tant que la somme de silice et d'oxydes alcalins contenus, soit compris entre 14 et 24 et de préférence entre 14 et 18.

La présente invention est avantageusement mise en œuvre lorsque le rapport pondéral de la quantité de silice SiO$_2$ à celle de l'oxyde ou des oxydes alcalins est compris entre 3 et 4 et de préférence entre 3 et 3,4.

De plus, ce nouvel additif a un taux d'humidité inférieur ou égal à 2% et de préférence inférieur ou égal à 0,5%.

Par ailleurs, la masse volumique apparente d'un granulé est inférieure à 5 g/cm$^3$ et en général comprise entre 2 et 3 g/cm$^3$: on remarque qu'elle est relativement faible par rapport à celle des oxydes de plomb, ce qui est l'indice d'une grande porosité.

Cette porosité est hautement favorable car elle permet d'obtenir des bains de verre ou de céramique homogènes dans lesquels on ne relève aucun phénomène anormal de ségrégation. Une autre conséquence de cette prosité est que de l'air se trouve emprisonné dans les granulés: en se dégageant dans le bain lors de la décomposition de ceux-ci, cet air entraîne un certain brassage du bain et un maintien des particules d'oxyde de plomb dans l'ensemble du bain. En d'autres termes, ces particules ne se rassemblement pas au fond du bain.

Il est bien évident que ce nouvel additif au plomb peut également comprendre une certaine quantité d'additifs complémentaires qui sont couramment utilisés dans ces industries du verre et de la céramique.

Sans que cette liste soit limitative, on peut citer à titre d'exemple comme additifs, l'oxyde arsénieux As$_2$O$_3$, l'oxyde d'antimoine Sb$_2$O$_3$, les nitrates et carbonates alcalins, les hydroxydes alcalins, du sable, ainsi que des produits organiques tels que huile, paraffine et kérosène.

Pour apprécier les caractéristiques des produits faisant l'objet de la présente invention, on effectue plusieurs tests qui permettent d'évaluer le taux de poussière formé lors des manipulations, et la résistance à l'abrasion des granulés.

Ces tests bien que non normalisés permettent de comparer ces nouveaux additifs au plomb aux produits existant sur le marché et actuellement utilisés dans l'industrie du verre et de la céramique.

L'aptitude de ces produits à ne pas former de poussières lors des manipulations est appréciée en plaçant 50 grammes de produit à tester sur un verre fritté disposé dans le bas d'un tube vertical de 50 mm de diamètre et de 1 mètre de longueur et en insufflant de l'air à un débit de 20 litres/minute par l'extrémité inférieure du tube pendant une durée de 5 minutes: les fines particules entraînées par le courant d'air à partir du lit fluidisé de produit à tester sont récupérées sur un filtre de polyéthylène (diamètre des pores: 60 micromètres) placé à l'extrémité supérieure du tube. Ce filtre est pesé avant et après l'opération et on déduit à partir de ces deux pesées le pourcentage de fines formées pendant l'opération: le résultat est donné dans le tableau ci-après en pourcentage et en milligrammes de fines pour 100 grammes de produit mis en œuvre.

La résistance à l'abrasion est déterminée en introduisant une masse de 150 grammes de produit dans un récipient cylindrique de 250 ml et en plaçant l'ensemble dans un mélangeur TURBULA type T2A pendant 5 minutes à une vitesse de rotation de 80 tours/minute, ce qui confère au produit et au récipient cylindrique un mouvement du type hélicoïdal. Le produit est, après cette opération, tamisé à 80 micromètres et les résultats sont donnés dans le tableau ci-après en milligrammes de fines inférieures à 80 micromètres pour 100 grammes de produit testé.

Les résultats de ces essais comparatifs effectués entre les produits faisant l'objet de la présente invention et les autres produits sont résumés dans le tableau suivant.

| Produits testés | Test poussière mg de fines pour 100 g de produit testé | Test abrasion au TURBULA |
|---|---|---|
| Poudre de minium sans liant | 292 | non testé |
| Minium (enrobé avec 0,2 % d'huile minérale) | 48 | non testé |
| Litharge pulvérulente | 78 | non testé |
| Litharge granulée à l'eau | 160 | 500 |
| Litharge granulée à l'eau | 273 | non testé |
| Litharge granulée par atomisation | 1000 | 400 |
| Silicate de plomb thermique pur | 20 | 100 |
| Silicate de plomb thermique impur | 80–200 | 70–220 |
| Minium granulé selon l'invention[1] | 10 | 50 |
| Litharge granulée selon l'invention[1] | 10 | 20–80 |
| Oxyde primaire granulé selon l'invention[1] | 50 | 40 |

[1] Produit contenant 4,56 % de $SiO_2$ et 1,50 % de $Na_2O$.

L'aptitude des granulés obtenus selon la présente invention à ne pas ségréger lors des manipulations des mélanges de ces granulés avec les autres constituants de la charge de type cristallerie peut être appréciée par exemples des deux façons suivantes.

On réalise à sec le mélange des produits dans un flacon en verre de 500 cm³ qui est placé sur un appareil TURBULA type T2A réglé à la vitesse de 30 tours/minute pendant 5 minutes.

Les mélanges testés sont réalisés à partir des produits suivants:

130 grammes de minimum granulé ou pulvérulent,
300 grammes de sable,
50 grammes de carbonate de potassium.

L'homogénéité du mélange est appréciée visuellement en examinant la répartition de la coloration rouge conférée par le minium, comme indiqué dans le tableau ci-dessous.

| Constituant du mélange | Répartition de la couleur rouge |
|---|---|
| Sable et minium pulvérulent | hétérogène |
| Sable et minium granulé | homogène |
| Sable, minium pulvérulés et carbonate de potassium | hétérogène |
| Sable, minium granulé et carbonate de potassium | homogène |

La granulométrie de ces constituants est comprise entre 80 micromètres et 1 millimètre.

On observe qu'aucune ségrégation n'a lieu lorsque l'on mélange du minium granulé conforme à la présente invention aux autres constituants de la charge.

Lorsque l'on met un mélange sable, minium granulé et carbonate de potassium dans un cylindre de 5 centimètres de haut et de 21 centimètres de diamètre, ce récipient étant ensuite placé sur un appareil à tamiser type TAMISOR réglé sur la graduation 30, on n'observe aucune ségrégation des granulés de minium sous l'effet des vibrations horizontales.

Si on met 100 grammes de ce même mélange dans une éprouvette cylindrique graduée, qui est fixée sur un appareil de tassage des poudres type HERMANN MORITZ réglé sur 250 coups/minute, on n'observe aucune ségrégation des granulés de minium dont la granulométrie est comprise entre 80 et 500 micromètres n'est observée.

Enfin des essais de fusion de charges de cristal réalisées à partir des granulés de minium n'ont pas mis en évidence de variation anormale de composition du cristal entre le haut et le bas du creuset de fusion.

## Exemple 1

On mélange dans un malaxeur, pendant vingt minutes, 7 kg de minium avec 1,6 kg d'une solution aqueuse à 80% de métasilicate de sodium ($SiO_2$, $Na_2O$, 5 $H_2O$). Comme le rapport moléculaire $R_m$ ($SiO_2/Na_2O$) est égal à l'unité, il est préférable de chauffer à une température de 65°C pendant cette étape de mélange a).

La pâte obtenue est évacuée sous forme de boudins ayant un centimètre de diamètre.

Ces boudins subissent ensuite un traitement thermique, c'est-à-dire un séchage à 120°C pendant une demi-heure puis un frittage à 350°C pendant une demi-heure.

Le produit issu de cette étape b) de traitement thermique est broyé dans un broyeur à mâchoires de façon à obtenir des granulés ayant une granulométrie comprise entre 80 micromètres et 2 millimètres.

## Exemple 2

On mélange 1000 g de litharge avec 80 g de silicate de sodium en poudre atomisée comprenant 61,2% de silice, 18,3% d'oxyde de sodium et 19,5% d'eau. On ajoute ensuite 120 g d'eau pour que le mélange constitue une pâte malléable.

Cette pâte est séchée pendant 15 minutes à 120°C, puis frittée pendant 45 minutes à 550°C.

Le produit ainsi obtenu est broyé et tamisé de façon à obtenir des granulés de granulométrie comprise entre 80 microns et un millimètre.

Les granulés comprennent 4,53% de silice et 1,35% d'oxyde de sodium.

## Exemple 3

On mélange 15 kg de minium avec 1,95 litres d'une solution aqueuse de silicate de sodium de densité 1,4. On ajoute en outre 0,3 litre d'eau de façon à obtenir une meilleure fluidité de la pâte. Ce mélange est malaxé dans un pétrin mécanique pendant environ 15 minutes.

La pâte obtenue est évacuée vers une boudineuse de façon à la conditionner sous forme de nouilles qui sont disposées par fraction de 5 kg dans des plateaux. Ceux-ci sont introduits dans un four à tapis dont la vitesse de défilement est de 3,25 m/h.

La température du four dans la zone de frittage est de 400°C et le temps de séjour dans cette zone est de 35 minutes.

A l'issue de ce traitement thermique, les produits obtenus sont broyés dans un concasseur à mâchoires puis dans un broyeur à disques de façon à obtenir des granulés dont la granulométrie est comprise entre 80 micromètres et 1 millimètre.

Après tamisage, on obtient des granulés dont la masse volumique apparente non tassée est de 2,9 g/cm³ et la masse volumique apparente tassé est de 3,3 g/cm³.

Ces granulés comprennent 4,73% de silice et 1,61% d'oxyde de sodium.

## Exemple 4

### Granulation du minium

Dans un mélangeur sphérique de type MORITZ dont la contenance est de 200 litres, qui est entraîné par un moteur de 25 cv et qui comprend un émotteur, on introduit 100 kg de minium et 9 litres d'une solution de silicate de soude RP 20N32, ce qui représente 12,6 kg de silicate. Le mélange est réalisé à 250 tours/minute pendant 8 minutes.

Le produit obtenu après un séchage à 150°C pendant 20 minutes présente la granulométrie suivante:

| Taille des granulés | % en poids |
|---|---|
| 1 mm | 30,5 |
| 500 micromètres à 1 mm | 13,5 |
| 80 à 500 micromètres | 54,4 |
| 80 micromètres | 1,6 |

Afin qu'un tel produit puisse être convenablement utilisé, il est nécessaire de le broyer pour ramener sa granulométrie entre 80 et 500 micromètres.

Après broyage, on ramène le titre en $SiO_2$ dans ce produit à 4,5% par addition d'une quantité appropriée de silicate de sodium, en l'occurence 3,20 kg à peu près, dans les mêmes conditions que ci-dessus. A l'issue du traitement thermique, on récupère des granulés conformes à la présente invention. Il a été noté que si le produit obtenu après broyage conduit à la formation de poussières, par contre les granulés n'en provoquent pas lors de leurs manipulations.

Ces granulés ont été testés industriellement dans une cristallerie. Il a été constaté qu'ils apportent une nette amélioration des conditions de travail car aucune trace de plomb n'a été détectée dans la cabine d'enfournement du mélange dans le four de fusion. Lorsque l'on emploie dans les mêmes conditions que ci-dessus du minium pulvérulent, le taux de plomb de cette atmosphère est de 0,3 mg/Nm³ d'air, l'analyse étant effectuée par absorption atomique.

## Exemple 5

Les mêmes observations qu'à l'exemple précédent sont constatées quand on emploie un mélangeur LÖDIGE type 130D/AD d'une capacité de 130 litres et dont la vitesse de rotation de la turbine est de 1400 tours/minute et celle des pales de 160 tours/minute.

On obtient environ 60% de granulés qui présentent une granulométrie comprise entre 80 et 500 micromètres.

Dans ce cas un broyage est nécessaire. Après une nouvelle addition de silicate de sodium dans les mêmes conditions que celles de l'exemple précédent, on obtient des granulés ne faisant plus de poussières.

## Exemple 6

On mélange 950 kg de minium avec 63 kg de silicate de sodium RP 20N32 dilué à 9,1%, soit 55% de la quantité totale de silicate nécessaire. Les opérations de mélange et de granulation sont réalisées dans un appareil cylindrique à axe vertical muni d'un arbre équipé de couteaux et tornant à 2700 tours/minute (par exemple matériel du type FLEXOMIX de la Société SCHUGI). Le produit obtenu est partiellement séché et mélangé avec 52 kg de silicate RP 20N32 dilué à 9,1%, à température ambiante dans le même matériel que précédemment, puis il est séché à 120°C pendant 15 minutes.

Le rendement de l'opération est supérieur à 90% et les granulés obtenus ont une taille comprise entre 80 microns et 0,5 millimètre. Les granulés ont une très bonne résistance à l'abrasion et ne font pas de poussière quand on les manipule. Le taux de poussière obtenu selon le test décrit plus haut est inférieur ou égal à 0,01%.

## Exemple 7

### Granulation de l'oxyde primaire

Dans le même appareil qu'à l'exemple 6, on mélange 950 kg d'oxyde primaire rouge de plomb avec 75 kg de silicate de sodium dilué à 9,1%, soit environ 45,4% de la quantité totale de silicate. Le produit obtenu est séché à 60°C pendant 15 minutes. Le produit séché est mélangé à 90 kg de silicate de sodium, soit 54,6% de la quantité totale de silicate, puis est séché à 120°C pendant 35 minutes.

La température du four dans la zone de frittage est de 400°C et le temps de séjour dans cette zone est de 35 minutes.

A l'issue de ce traitement thermique, le produit est tamisé à 500 micromètres et à 80 micromètres. La fraction inférieure à 80 micromètres et celle supérieure à 500 micromètres après broyage, soit environ 10% du produit obtenu après le traitement thermique, sont recyclées vers la deuxième introduction de la quantité de silicate de sodium.

8

On obtient ainsi des granulés dont la masse volumique apparente non tassée est de 2,9 g/cm$^3$ et la masse volumique apparente tassée est de 3,3 g/cm$^3$.

Ces granulés comprennent 4,73% de silice et 1,61% d'oxyde de sodium.

## Exemple 8

### Granulation de la litharge

On mélange 950 kg de litharge avec 75 kg de silicate de sodium soluble dilué à 9,1%, soit 45,4% de la quantité totale de silicate. La pâte obtenue est séchée à 60° C pendant 5 minutes. Le produit séché est mélangé à 90 kg de silicate de sodium, soit 54,6% de la quantité totale de silicate nécessaire, qui est dilué à 9,1%, puis est séché à 120° C pendant 10 minutes. Le rendement est de 88% environ de granulés présentant une granulométrie comprise entre 80 et 500 micromètres. Ce rendement peut être ramené à 100% en recyclant les 12% de produits non compris entre 80 et 500 micromètres vers la deuxième addition de silicate de sodium comme décrit dans l'exemple 7. Ces granulés donnent au test de poussière moins de 0,01% de poussière.

Lorsque l'on introduit les granulés obtenus selon l'un des exemples précédents dans des bains de verre, et notamment de cristal, on n'observe pour ainsi dire aucun phénomène de ségrégation.

En outre, on remarque qu'à la différence des procédés de granulation classiques, on obtient non pas des granulés sphériques mais des granulés de forme irrégulière qui ont par là-même une moindre tendance à la ségrégation pendant leur mélange, leur transport et leur enfournement.

L'utilisation de ces nouveaux additifs au plomb n'est pas limitée aux industries du verre et de la céramique; ils peuvent être avantageusement employés pour la fabrication d'émaux, d'accumulateurs, tels que des batteries tubulaires, ainsi que pour l'obtention de frittes, cette énumération d'applications n'étant nullement limitative.

## Revendications

1. Additif au plomb contenant un oxyde de plomb et un silicate alcalin caractérisé par le fait que le rapport pondéral de la quantité de plomb, calculée en tant que PbO, à la quantité de silicate alcalin, calculée en tant que SiO$_2$, est supérieur à 18 : 1, que le taux d'humidité dudit additif est inférieur ou égal à 2%, et que sa masse volumique est au plus égale à 5 g/cm$^3$.

2. Additif au plomb selon la revendication 1, caractérisé par le fait que ledit rapport pondéral est compris entre 18 et 32.

3. Additif au plomb selon la revendication 2, caractérisé par le fait que ledit rapport pondéral est compris entre 18 et 23.

4. Additif au plomb selon les revendications 1 à 3 prises séparément, caractérisé par le fait que le rapport pondéral de la quantité de plomb, calculée en tant que PbO, à la quantité de silicate alcalin, calculée en tant que la somme de silice et d'oxyde alcalin, est compris entre 14 et 24.

5. Additif au plomb selon la revendication 4, caractérisé par le fait que ledit rapport pondéral est compris entre 14 et 18.

6. Additif au plomb selon les revendications 1 à 5 prises séparément, caractérisé par le fait que l'oxyde de plomb est choisi dans le groupe constitué par les oxydes primaires de plomb, la litharge, le minium et les mélanges de ces oxydes.

7. Additif au plomb selon les revendications 1 à 6 prises séparément, caractérisé par le fait que ledit silicate alcalin est le silicate de sodium, le silicate de potassium ou leurs mélanges.

8. Additif au plomb selon les revendications 1 à 7 prises séparément, caractérisé par le fait que le rapport pondéral de la quantité de silice à celle de l'oxyde ou des oxydes alcalins contenus dans ledit silicate est compris entre 1 et 4.

9. Additif au plomb selon la revendication 8, caractérisé par le fait que ledit rapport pondéral est compris entre 3 et 4.

10. Additif au plomb selon la revendication 9, caractérisé par le fait que ledit rapport pondéral est compris entre 3 et 3,4.

11. Procédé pour obtenir un additif au plomb selon les revendications 1 à 10 prises séparément, caractérisé par le fait qu'il comprend les étapes suivantes:

a) on mélange un oxyde de plomb avec tout ou partie d'une quantité déterminée d'un silicate alcalin soluble dans l'eau pour obtenir une pâte malléable;

b) on conditionne le produit obtenu à l'etape a) de façon à obtenir des granulés de taille convenable;

c) on soumet le produit issu de l'étape b) à un traitement thermique.

12. Procédé selon la revendication 11, caractérisé par le fait que l'on soumet la pâte malléable obtenue à l'étape a) à un traitement thermique avant l'étape b) de conditionnement.

13. Procédé selon les revendications 11 à 12 prises séparément, caractérisé par le fait que ladite étape c) de traitement thermique comprend, d'une part, une première phase à une température comprise entre 50 et 200°C pendant une durée comprise entre quelques minutes et une heure, et, d'autre part, une seconde phase à une température comprise entre 80 et 700°C pendant une durée variant entre quelques minutes et une heure.

14. Procédé selon la revendication 13, caractérisé par le fait que la température de la seconde phase est comprise entre 300 et 450°C lorsque l'oxyde de plomb utilisé est le minium.

15. Procédé selon la revendication 13, caractérisé par le fait que la température de la seconde phase est comprise entre 400 et 700°C lorsque l'oxyde de plomb utilisé est la litharge.

16. Procédé selon les revendications 13 à 15 prises séparément, caractérisé par le fait que les deux phases de l'étape c) sont réalisées dans une même enceinte.

17. Procédé selon les revendications 11 à 16 prises séparément, caractérisé par le fait que les étapes b) et c) sont réalisées simultanément.

18. Procédé selon la revendication 17, caractérisé par le fait qu'on mélange au cours de l'étape a) l'oxyde de plomb avec au plus les deux tiers et de préférence moins de la moitié de la quantité totale de silicate alcalin, et on ajoute la quantité restante entre la première et la seconde phase de l'étape c), la première phase étant effectuée à une température comprise entre 50 et 70°C pendant une durée comprise entre quelques minutes et une heure et la seconde phase à une température comprise entre 80 et 150°C pendant quelques minutes à une heure.

19. Procédé selon la revendication 18, caractérisé par le fait que la température de la seconde phase est comprise entre 100 et 130°C.

## Patentansprüche

1. Bleizusatz, der ein Bleioxid und ein Alkalisilikat enthält, dadurch gekennzeichnet, daß das Gewichtsverhältnis der Bleimenge, berechnet als PbO, zur Menge Alkalisilikat, berechnet als $SiO_2$, größer als 18 : 1 ist, daß der Feuchtigkeitsgehalt des Zusatzes unter oder gleich 2% beträgt und daß seine Schüttdichte bei höchstens 5 g/cm³ liegt.

2. Bleiszusatz nach Anspruch 1, dadurch gekennzeichnet, daß das genannte Gewichtsverhältnis zwischen 18 und 32 liegt.

3. Bleizusatz nach Anspruch 2, dadurch gekennzeichnet, daß das genannte Gewichtsverhältnis zwischen 18 und 23 liegt.

4. Bleizusatz nach jeweils einem der Ansprüche 1 bis 3, dadurch gekennzeichnet, daß das Gewichtsverhältnis der Bleimenge, berechnet als PbO, zur Menge Alkalisilikat, berechnet als Summe von Siliciumoxid und Alkalioxid, zwischen 14 und 24 liegt.

5. Bleizusatz nach Anspruch 4, dadurch gekennzeichnet, daß das genannte Gewichtsverhältnis zwischen 14 und 18 liegt.

6. Bleizusatz nach jeweils einem der Ansprüche 1 bis 5, dadurch gekennzeichnet, daß das Bleioxid ausgewählt ist aus der Gruppe bestehend aus den primären Bleioxiden, der Bleiglätter, dem Minium und Mischungen dieser Oxide.

7. Bleizusatz nach jeweils einem der Ansprüche 1 bis 6, dadurch gekennzeichnet, daß das genannte Alkalisilikat aus Natriumsilikat, Kaliumsilikat oder Mischungen derselben besteht.

8. Bleizusatz nach jeweils einem der Ansprüche 1 bis 7, dadurch gekennzeichnet, daß das Gewichtsverhältnis der Menge Siliciumoxid zu der Menge an in dem genannten Silikat enthaltenem (enthaltenen) Alkalioxid(-oxiden) zwischen 1 und 4 liegt.

9. Bleizusatz nach Anspruch 8, dadurch gekennzeichnet, daß das genannte Gewichtsverhältnis zwischen 3 und 4 liegt.

10. Bleizusatz nach Anspruch 9, dadurch gekennzeichnet, daß das genannte Gewichtsverhältnis zwischen 3 und 3,4 liegt.

11. Verfahren zur Herstellung eines Bleizusatzes nach jeweils einem der Ansprüche 1 bis 10, dadurch gekennzeichnet, daß es folgende Stufen umfaßt:

a) man mischt ein Bleioxid mit der gesamten vorherbestimmten Menge oder einem Teil derselben eines wasserlöslichen Alkalisilikats, um eine geschmeidige Paste zu erhalten;

b) man behandelt das in Stufe a) erhaltene Produkt so, daß man ein Granulat geeigneter Korngröße erhält;

c) man unterwirft das aus Stufe b) stammende Produkt einer thermischen Behandlung.

12. Verfahren nach Anspruch 11, dadurch gekennzeichnet, daß man die in Stufe a) erhaltene geschmeidige Paste vor der Behandlungsstufe b) einer thermischen Behandlung unterwirft.

13. Verfahren nach jeweils Anspruch 11 oder 12, dadurch gekennzeichnet, daß die genannte Stufe c) der thermischen Behandlung einerseits eine erste Phase bei einer Temperatur zwischen 50 und 200°C während eines Zeitraums von einigen Minuten bis zu einer Stunde und andererseits eine zweite Phase bei einer Temperatur zwischen 80 und 700°C während eines zwischen einigen Minuten und einer

**0 017 521**

Stunde variierenden Zeitraums umfaßt.

14. Verfahren nach Anspruch 13, dadurch gekennzeichnet, daß die Temperatur der zweiten Phase zwischen 300 und 450° C liegt, wenn das verwendete Bleioxid Minium ist.

15. Verfahren nach Anspruch 13, dadurch gekennzeichnet, daß die Temperatur der zweiten Phase zwischen 400 und 700° C liegt, wenn das verwendete Bleioxid Bleiglätte ist.

16. Verfahren nach jeweils einem der Ansprüche 13 bis 15, dadurch gekennzeichnet, daß die beiden Phasen der Stufe c) in der gleichen Kammer vorgenommen werden.

17. Verfahren nach jeweils einem der Ansprüche 11 bis 16, dadurch gekennzeichnet, daß die Stufen b) und c) gleichzeitig vorgenommen werden.

18. Verfahren nach Anspruch 17, dadurch gekennzeichnet, daß man im Verlauf der Stufe a) das Bleioxid mit höchstens zwei Dritteln und vorzugsweise weniger als der Hälfte der Gesamtmenge Alkalisilikat mischt und die verbleibende Menge zwischen der ersten und der zweiten Phase der Stufe c) zusetzt, wobei die erste Phase bei einer Temperatur zwischen 50 und 70° C während eines Zeitraums zwischen einigen Minuten und einer Stunde und die zweite Phase bei einer Temperatur zwischen 80 und 150° C während einiger Minuten bis zu einer Stunde vorgenommen wird.

19. Verfahren nach Anspruch 18, dadurch gekennzeichnet, daß die Temperatur der zweiten Phase zwischen 100 und 130° C liegt.

**Claims**

1. Lead additive containing a lead oxide and an alkaline silicate characterised by the fact that the weight ratio of the quantity of lead, calculated als PbO, to the quantity of alkaline silicate, calculated als $SiO_2$, is higher than 18 : 1, that the moisture content in the said additive is less than or equal to 2% and that its volume is at most equal to 5 g/cm³.

2. Lead additive according to claim 1 characterised by the fact that the said weight ratio is between 18 and 32.

3. Lead additive according to claim 2 characterised by the fact that the said weight ratio is between 18 and 23.

4. Lead additive according to claims 1 to 3 taken separately characterised by the fact that the weight ratio of the quantity of lead, calculated as PbO, to the quantity of alkaline silicate, calculated as the sum of silica and alkaline oxide, is between 14 and 24.

5. Lead additive according to claim 4 characterised by the fact that the said wight ratio is between 14 and 18.

6. Lead additive according to claims 1 to 5 taken separately characterised by the fact that the lead oxide is selected from the group consisting of primary lead oxides, litharge, minium and mixtures of these oxides.

7. Lead additive according to claims 1 to 6 taken separately characterised by the fact that the said alkaline silicate is sodium silicate, potassium silicate or mixtures thereof.

8. Lead additive according to claims 1 to 7 taken separately characterised by the fact that the weight ratio of the quantity of silica to the quantity of alkaline oxides(s) contained in the said silicate is between 1 and 4.

9. Lead additive according to claim 8 characterised by the fact that the said weight ratio is between 3 and 4.

10. Lead additive according to claim 9 characterised by the fact that the said weight ratio is between 3 and 3.4.

11. Process for obtaining a lead additive according to claims 1 to 10 taken separately characterised by the fact that it comprises the following stages:

a)  a lead oxide is mixed with all or part of a specific quantity of a water-soluble alkaline silicate to obtain a malleable paste;

b)  the product obtained in stage a) is processed so as to obtain granules of a suitable size;

c)  the product coming from stage b) is subjected to heat treatment.

12. Process according to claim 11 characterised by the fact that the malleable paste obtained in stage a) is subjected to heat treatment prior to processing stabe b).

13. Process according to claims 11 to 12 taken separately characterised by the fact that the said heat treatment stage c) comprises, on the one hand, a first phase at a temperature between 50 and 200° C lasting between a few minutes and one hour and, on the other hand, a second phase at a temperature between 80 and 700° C lasting for a time varying between a few minutes and one hour.

14. Process according to claim 13 characterised by the fact that the temperature of the second phase is between 300 and 450° C when the lead oxide used is minium.

15. Process according to claim 13 characterised by the fact that the temperature of the second phase is between 400 and 700° C when the lead oxide used is litharge.

16. Process according to claims 13 to 15 taken separately characterised by the fact that the two

11

**0 017 521**

phases of stage c) are carried out in the same place.

17. Process according to claims 11 to 16 taken separately characterised by the fact that stages b) and c) are carried out simultaneously.

18. Process according to claim 17 characterised by the fact that during stage a) the lead oxide is mixed with at most two-thirds and preferably less than half of the total quantity of alkaline silicate, and the remaining quantity is added between the first and second phases of stage c), the first phase being carried out at a temperature between 50 and 70°C for a time between a few minutes and one hour and the second phase at a temperature between 80 and 150°C for a few minutes to one hour.

19. Process according to claim 18 characterised by the fact that the temperature of the second phase is between 100 and 130°C.

12